(19) Europäisches Patentamt
European Patent Office
Office européen des brevets

(11) **EP 2 355 275 A2**

(12) **EUROPÄISCHE PATENTANMELDUNG**

(43) Veröffentlichungstag:
**10.08.2011 Patentblatt 2011/32**

(51) Int Cl.:
***H02B 1/01*** *(2006.01)*

(21) Anmeldenummer: **11000630.1**

(22) Anmeldetag: **26.01.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **01.02.2010   CH 1132010**

(71) Anmelder: **Almatec AG**
**6170 Schüpfheim (CH)**

(72) Erfinder:
• **Limacher, Tony**
**6182 Escholzmatt (CH)**
• **Limacher, Roger**
**6182 Escholzmatt (CH)**
• **Hertli, Fredy**
**6072 Sachseln (CH)**

(74) Vertreter: **Lauer, Joachim**
**Stapferstrasse 5**
**Postfach 2651**
**8033 Zürich (CH)**

(54) **Befestigungsvorrichtung und Einschubprofil**

(57)     Bei einer Befestigungsvorrichtung zur Verwendung insbesondere an einem Rahmen (10) eines Elektroschranks mit einer Gleitschiene für Gewindegleiter (20), welche Gleitschiene zwei seitliche, sich mit Abstand gegenüberliegende Führungsrillen aufweist, zwischen welchen eine Schlitzöffnung für den Durchgriff von Befestigungsschrauben (30) zu den Gewindegleitern (20) vorhanden ist, ist es erfindungsgemäss vorgesehen, dass in die Gleitschiene ein Einschubprofil (40) eingeschoben ist, welches in den seitlichen Führungsrillen der Gleitschiene gehalten und mit einem durch die genannte Schlitzöffnung zugänglichen Gewindekanal für das Eindrehen von Befestigungsschrauben (30) an einer beliebigen Position in Profil-Längsrichtung versehen ist.

Fig.5

EP 2 355 275 A2

**Beschreibung**

TECHNISCHES GEBIET

Die vorliegende Erfindung betrifft eine Befestigungsvorrichtung zur Verwendung insbesondere an einem Rahmen eines Elektroschranks mit einer Gleitschiene für Gewindegleiter, welche Gleitschiene zwei seitliche, sich mit Abstand gegenüberliegende Führungsrillen aufweist, zwischen welchen eine Schlitzöffnung für den Durchgriff von Befestigungsschrauben zu den Gewindegleitern vorhanden ist.

Die Erfindung betrifft auch ein Einschubprofil für eine solche Befestigungsvorrichtung.

STAND DER TECHNIK

Eine Befestigungsvorrichtung der genannten Art ist beispielsweise aus DE 20 2008 00124 U1 bekannt und dort an einem Eckpostenprofil eines Elektroschranks ausgebildet, wobei Seitenwandhalter als Anschlusselemente an der Befestigungsvorrichtung angeschlossen sind. Die Befestigungsvorrichtung ist jedoch auch zur Befestigung von Elektronikkomponenten geeignet und in Verwendung.

Vorteilhaft an der bekannten Befestigungsvorrichtung ist, dass unterschiedlichste Anschlusselemente an beliebiger Position entlang der Gleitschiene angeschlossen werden können. Nachteilig ist, dass die Gewindegleiter zum Anschluss der gewünschten Anschlusselemente in ausreichender Anzahl bereits vorab in die Gleitschienen von einem freien Ende her eingeschoben werden müssen. Nach der Montage der Anschlusselemente besteht keine Möglichkeit mehr, weitere Gewindegleiter zumindest zwischen zwei bereits mit einer Befestigungsschraube fixierte Gewindegleiter einzubringen.

DARSTELLUNG DER ERFINDUNG

Aufgabe der Erfindung ist es, diesbezüglich Abhilfe zu schaffen. Gelöst wird diese Aufgabe durch eine Befestigungsvorrichtung gemäss Patentanspruch 1. Die erfindungsgemäse Befestigungsvorrichtung ist demnach dadurch gekennzeichnet, dass in die Gleitschiene ein Einschubprofil eingeschoben ist, welches in den seitlichen Führungsrillen der Gleitschiene gehalten und mit einem durch die genannte Schlitzöffnung zugänglichen Gewindekanal für das Eindrehen von Befestigungsschrauben an einer beliebigen Position in Profil-Längsrichtung versehen ist.

In das Einschubprofil können Befestigungsschrauben auch zwischen zwei bereits montierte Befestigungsschrauben eingedreht werden, wodurch die erwähnte Einschränkung der bekannten Befestigungsvorrichtung aufgehoben ist.

Bevorzugte Ausgestaltungen der erfindungsgemässen Befestigungsvorrichtung ergeben sich aus den abhängigen Patentansprüchen 2-9.

So ist der Gewindekanal des Einschubprofils an seinen sich gegenüberliegenden Seitenwänden vorzugsweise jeweils mit einer in Profil-Längsrichtung verlaufenden Riffelung aus einer gleichmässigen Abfolge von Vorsprüngen und Vertiefungen versehen, wobei die Vorsprünge an einer Seitenwand den Vertiefungen an der anderen Seitenwand gegenüberliegen und umgekehrt.

Die lichte Weite W zwischen den Riffelungen, der Höhenunterschied H zwischen den Vorsprüngen und den Vertiefungen der Riffelungen sowie der gegenseitige Abstand A zwischen zwei benachbarten Vorsprüngen bzw. zwei benachbarten Vertiefungen der Riffelungen sind bevorzugt wie folgt entsprechend dem Aussendurchmesser D (Gewindebolzen), dem Kernlochdurchmesser D1 (Innengewinde) und der Steigung P eines Normgewindes, insbesondere eines metrischen Normgewindes, vorzugsweise eines M6-Normgewindes, entsprechend bemessen:

$$W = D1$$

$$H = (D - D1)/2$$

$$A = P$$

Die Flanken der Vorsprünge und der Vertiefungen sind bevorzugt um jeweils 60° gegeneinander geneigt.

Die lichte Weite W zwischen den Riffelungen an den Seitenwänden des Gewindekanals verjüngt sich bevorzugt in Eindrehrichtung der Befestigungsschrauben um z.B. 1.5°-2.5°.

Befestigungsschrauben mit einem Normgewinde, insbesondere einem metrischen Normgewinde, vorzugsweise einem M6-Normgewinde, sollten zerstörungsfrei und mehrfach an derselben Position in den Gewindekanal ein- und aus diesem wieder ausgedreht werden können.

Das Einschubprofil kann zur Ausbildung des Gewindekanals mit Vorteil ein u-förmiges Mittelteil aufweisen, an dessen Seitenwänden nach aussen abstehende Leisten für den Eingriff in die seitlichen Führungsrillen der Gleitschiene angeformt sind.

Vorzugsweise sind die an den Seitenwänden des u-förmigen Mittelteils nach aussen abstehenden Leisten entlang ihrer Aussenkante entsprechend der Breite der Führungsrillen verbreitert.

Schliesslich ist es bevorzugt, wenn die Gleitschiene der genannten Schlitzöffnung für den Durchgriff von Befestigungsschrauben gegenüberliegend eine weitere Schlitzöffnung zwischen den Führungsrillen aufweist, welche weitere Schlitzöffnung das Einschubprofil mit seinem u-förmigen Mittelteil durchgreift.

Gegenstand der Erfindung ist auch ein Einschubprofil für eine solche Befestigungsvorrichtung nach der Erfindung gemäss Anspruch 10, welche dadurch gekennzeichnet ist,

dass es mit einem Gewindekanal für das Eindrehen von Befestigungsschrauben an einer beliebigen Position in Profil-Längsrichtung versehen ist,

dass der Gewindekanal an seinen sich gegenüberliegenden Seitenwänden jeweils mit einer in Profil-Längsrichtung verlaufenden Riffelung aus einer gleichmässigen Abfolge von Vorsprüngen und Vertiefungen versehen ist,

dass die Vorsprünge an einer Seitenwand den Vertiefungen an der anderen Seitenwand gegenüberliegen und umgekehrt,

dass die lichte Weite W zwischen den Riffelungen, der Höhenunterschied H zwischen den Vorsprüngen und den Vertiefungen der Riffelungen sowie der gegenseitige Abstand A zwischen zwei benachbarten Vorsprüngen bzw. zwei benachbarten Vertiefungen der Riffelungen wie folgt entsprechend dem Aussendurchmesser D (Gewindebolzen), dem Kernlochdurchmesser D1 (Innengewinde) und der Steigung P eines Normgewindes entsprechend bemessen sind:

$$W = D1$$

$$H = (D - D1)/2$$

$$A = P$$

dass Befestigungsschrauben mit einem Normgewinde zerstörungfrei und mehrfach an derselben Position in den Gewindekanal ein- und aus diesem wieder ausgedreht werden können,

dass das Einschubprofil zur Ausbildung des Gewindekanals ein u-förmiges Mittelteil aufweist, an dessen Seitenwänden nach aussen abstehende Leisten für den Eingriff in die seitlichen Führungsrillen der Gleitschiene angeformt sind, und dass die von den Seitenwänden des u-förmigen Mittelteils nach aussen abstehenden Leisten entlang ihrer Aussenkante verbreitert sind.

Bevorzugte Ausgestaltungen des erfindungsgemässen Einschubprofils ergeben sich aus den abhängigen Patentansprüchen 11 und 12.

KURZE ERLÄUTERUNG DER FIGUREN

Die Erfindung soll nachfolgend anhand eines Ausführungsbeispiels im Zusammenhang mit der Zeichnung näher erläutert werden. Es zeigen:

Fig. 1    das Profil einer Eckprofilstange eines Rahmengestells eines Elektroschranks mit zwei Gleitschienen für Gewindegleiter zur Befestigung von Anschlusselementen;

Fig. 2    einen Gewindegleiter mit zugehöriger Befestigungsschraube;

Fig. 3    das Profil eines Einschubprofils nach der Erfindung;

Fig. 4    einen Abschnitt des Einschubprofils in perspektivischer Ansicht;

Fig. 5    das Einschubprofil mit Massangaben; und

Fig. 6    die Eckprofilstange von Fig. 1 mit einem Einschubprofil in einer der Gleitschienen und einem Gewindegleiter in der anderen, wobei jeweils Anschlusselemente mit dem Einschubprofil und dem Gewindegleiter befestigt sind.

WEGE ZUR AUSFÜHRUNG DER ERFINDUNG

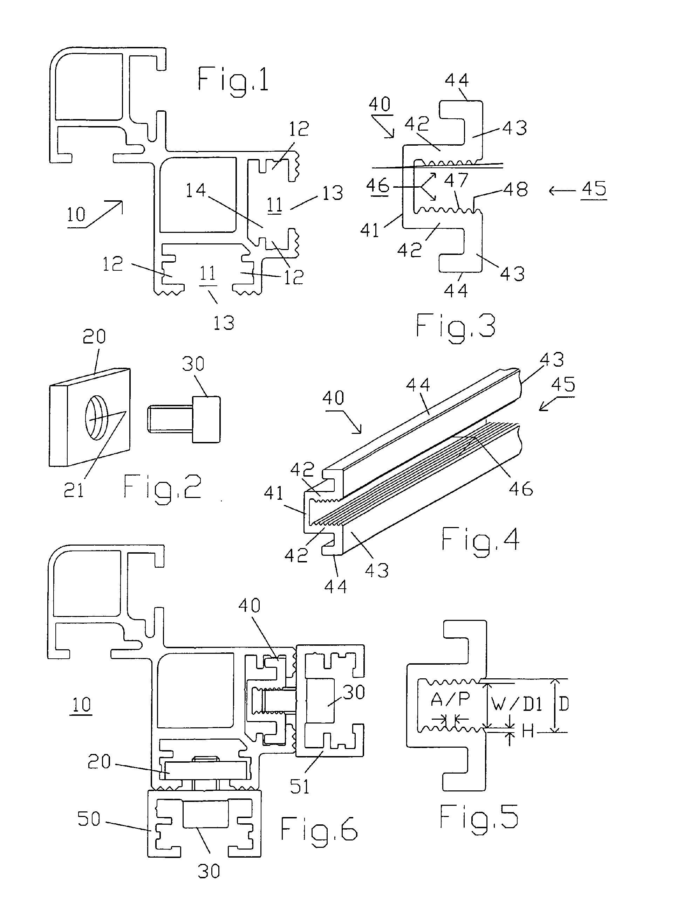

Fig. 1 zeigt das Profil einer Eckprofilstange 10 eines Rahmengestells eines Elektroschranks. Die Eckprofilstange 10 ist mit zwei Gleitschienen 11 versehen, in welche Gewindegleiter von ihren Enden her eingeschoben werden können. Mittels Befestigungsschrauben, die durch Befestigungslöcher in zu befestigenden Anschlusselementen durchgesteckt und in die Gewindegleiter eingedreht werden, können Anschlusselemente an einer beliebigen Position in Profil-Längsrichtung festgeschraubt werden. Einen entsprechenden Gewindeleiter 20 und eine entsprechende Befestigungsschraube 30 zeigt Fig. 2.

Die Gewindegleiter 20 sind in den Gleitschienen 11 beiseitig in sich gegenüberliegenden Führungsrillen 12 geführt. Die Befestigungsschrauben 30 greifen durch eine äussere Schlitzöffnung 13 der Gleitschienen 11 in das zentrale Gewindeloch 21 der Gewindegleiter 20 ein. Ein mit einem Gewindegleiter 20 und einer eingedrehten Befestigungsschraube 30 an der Rahmenprofilstange 10 befestigtes Anschlusselemente 50 zeigt Fig. 6. Das üblicherweise bei Elektroschränken verwendete Mass für die Befestigungsschrauben 30 bzw. das zentrale Gewindeloch 21 der Gewindegleiter 20 ist M6.

Die Figuren 3, 4 und 5 zeigen ein erfindungsgemässes Einschubprofil 40, welches anstelle der Gewindegleiter 20 in die Gleitschienen 11 der Eckprofilstange 10 eingeschoben werden kann. Das Einschubprofil 40 weist ein u-förmiges Mittelteil 41 mit zwei Seitenwänden 42 auf, an deren vorderen bzw. äusseren Kanten zwei nach aussen abstehende Leisten 43 angeformt sind. An ihren äusseren Kanten 44 sind diese Leisten 43 nach hinten abgebogen und dadurch entsprechend der Breite der Führungsrillen 12 bzw. der Dicke der Gewindegleiter 20 verbreitert.

Der u-förmige Mittelteil 41 des Einschubprofils 40 bildet einen Gewindekanal 45 für das Eindrehen von Befestigungsschrauben 30 an einer beliebigen Position in Profil-Längsrichtung, indem die Seitenwände 42 an ihren sich gegenüberliegenden Innenseiten jeweils mit einer Riffelung 46 versehen sind.

Die Riffelung 46 besteht aus einer gleichmässigen Abfolge von sich entlang des Einschubprofils 40 erstreckenden Vorsprüngen 47 und Vertiefungen 48, wobei die Vorsprünge 47 an einer Seitenwand 42 den Vertiefungen 48 an der anderen Seitenwand 42 gegenüberliegen und umgekehrt. Es sollten wenigstens vier, vorzugsweise jedoch wenigstens fünf Vorsprünge 47 an einer der beiden Seitenwände 42 vorhanden sein.

Bevorzugt ist, wie in Fig. 5 verdeutlicht, die lichte Weite W zwischen den Riffelungen 46, der Höhenunterschied H zwischen den Vorsprüngen 47 und den Vertiefungen 48 der Riffelungen 46 sowie der gegenseitige Abstand A zwischen zwei benachbarten Vorsprüngen 47 bzw. zwei benachbarten Vertiefungen 48 der Riffelungen 46 wie folgt entsprechend dem Aussendurchmesser D (Gewindebolzen), dem Kernlochdurchmesser D1 (Innengewinde) und der Steigung P eines Normgewindes, insbesondere eines metrischen Normgewindes, vorzugsweise eines M6-Normgewindes, entsprechend bemessen:

$$W = D1$$

$$H = (D - D1)/2$$

$$A = P$$

Die Flanken der Vorsprünge 47 und der Vertiefungen 48 können mit Vorteil um jeweils 60° gegeneinander geneigt sein. Wie dies in Fig. 3 zu erkennen ist, verjüngt sich weiter bevorzugt die lichte Weite W zwischen den Riffelungen 46 an den Seitenwänden 42 des Gewindekanals 45 in Eindrehrichtung der Befestigungsschrauben 30 beispielsweise um ca 2°, wodurch eine höhere Anzugs- bzw. Haltekraft für die Schrauben erreicht wird.

Bei der beschriebenen, bevorzugten Ausbildung können Befestigungsschrauben 20 insbesondere mit einem M6-Normgewinde zerstörungfrei sowie mehrfach an derselben Position in den Gewindekanal 45 ein- und aus diesem wieder ausgedreht werden.

Fig. 6 zeigt ein erfindungsgemässes Einschubprofil 40 eingeschoben in eine der beiden Gleitführungen 11 der Eckprofilstange 10. Das Einschubprofil 40 greift dabei mit seinen von dem u-förmigen Mittelteil 41 nach aussen abstehenden Leisten 43 in die Führungsrillen 12 der Gleitführung 11 ein. Mittels einer die vordere Schlitzöffnung 13 der Gleitführung 11 durchgreifenden und in den Gewindekanal 45 des Einschubprofils 40 eingedrehten Befestigungsschraube 30 ist ein Anschlusselement 51 and der Eckprofilstange 10 befestigt.

Damit genügend Vorsprünge 47 und Vertiefungen 48 im Gewindekanal 45 Platz haben, sind die beiden Seitenwände 42 des u-förmigen Mittelteils 41 des Einschubprofils 40 breiter ausgebildet als die Führungsrillen 12 der Gleitschienen 11. Das Einschubprofil 40 durchgreift dadurch mit einem u-förmigen Mittelteil 41 eine weitere, hintere Schlitzöffnung 14 der Gleitschienen 11 unter optimaler Ausnutzung des in dem Eckprofil 10 vorhandenen Platzes.

Die beiden in Fig. 6 dargestellten Anschlusselemente 50 und 51 sind rein beispielhaft. Grundsätzlich könnte es sich hierbei um beliebige, insbesonders um üblicherweise in Elektroschränken befestige Teile handeln.

BEZEICHNUNGSLISTE

Befestigungsvorrichtung

10  Eckprofilstange

11  Gleitschiene für Gewindegleiter

20  Gewindegleiter

21  Gewindeloch

12  Führungsrillen

13  Schlitzöffnung

14  weitere Schlitzöffnung

30  Befestigungsschrauben

40  Einschubprofil

41  u-förmiges Mittelteil

42  Seitenwände

43  nach aussen abstehende Leisten

44  Aussenkanten der Leisten

45  Gewindekanal

46  Riffelung

47 Vorsprünge

48 Vertiefungen

50 Anschlusselement

51 Anschlusselement

**Patentansprüche**

1. Befestigungsvorrichtung zur Verwendung insbesondere an einem Rahmen (10) eines Elektroschranks mit einer Gleitschiene (11) für Gewindegleiter (20), welche Gleitschiene (11) zwei seitliche, sich mit Abstand gegenüberliegende Führungsrillen (12) aufweist, zwischen welchen eine Schlitzöffnung (13) für den Durchgriff von Befestigungsschrauben (30) zu den Gewindegleitern (20) vorhanden ist, **dadurch gekennzeichnet, dass** in die Gleitschiene (11) ein Einschubprofil (40) eingeschoben ist, welches in den seitlichen Führungsrillen (12) der Gleitschiene (11) gehalten und mit einem durch die genannte Schlitzöffnung (13) zugänglichen Gewindekanal (45) für das Eindrehen von Befestigungsschrauben (30) an einer beliebigen Position in Profil-Längsrichtung versehen ist.

2. Befestigungsvorrichtung nach Anspruch 1, **dadurch gekennzeichnet, dass** der Gewindekanal (45) des Einschubprofils (40) an seinen sich gegenüberliegenden Seitenwänden (42) jeweils mit einer in Profil-Längsrichtung verlaufenden Riffelung (46) aus einer gleichmässigen Abfolge von Vorsprüngen und Vertiefungen versehen ist, wobei die Vorsprünge an einer Seitenwand (42) den Vertiefungen an der anderen Seitenwand (42) gegenüberliegen und umgekehrt.

3. Befestigungsvorrichtung nach Anspruch 2, **dadurch gekennzeichnet, dass** die lichte Weite W zwischen den Riffelungen (46), der Höhenunterschied H zwischen den Vorsprüngen und den Vertiefungen der Riffelungen (46) sowie der gegenseitige Abstand A zwischen zwei benachbarten Vorsprüngen bzw. zwei benachbarten Vertiefungen der Riffelungen (46) wie folgt entsprechend dem Aussendurchmesser D (Gewindebolzen), dem Kernlochdurchmesser D1 (Innengewinde) und der Steigung P eines Normgewindes, insbesondere eines metrischen Normgewindes, vorzugsweise eines M6-Normgewindes, entsprechend bemessen sind:

$$W = D1$$

$$H = (D - D1)/2$$

$$A = P$$

4. Befestigungsvorrichtung nach Anspruch 3, **dadurch gekennzeichnet, dass** die Flanken der Vorsprünge und der Vertiefungen um jeweils 60° gegeneinander geneigt sind.

5. Befestigungsvorrichtung nach einem der Ansprüche 3-4, **dadurch gekennzeichnet**, sich die lichte Weite W zwischen den Riffelungen (46) an den Seitenwänden (42) des Gewindekanals (45) in Eindrehrichtung der Befestigungsschrauben (30) verjüngt.

6. Befestigungsvorrichtung nach einem der Ansprüche 1-5, **dadurch gekennzeichnet, dass** Befestigungsschrauben (30) mit einem Normgewinde, insbesondere einem metrischen Normgewinde, vorzugsweise einem M6-Normgewinde, zerstörungfrei und mehrfach an derselben Position in den Gewindekanal (45) ein- und aus diesem wieder ausgedreht werden können.

7. Befestigungsvorrichtung nach einem der Ansprüche 1-6, **dadurch gekennzeichnet, dass** das Einschubprofil (40) zur Ausbildung des Gewindekanals (45) ein u-förmiges Mittelteil (41) aufweist, an dessen Seitenwänden (42) nach aussen abstehende Leisten (43) für den Eingriff in die seitlichen Führungsrillen (12) der Gleitschiene (11) angeformt sind.

8. Befestigungsvorrichtung nach Anspruch 7, **dadurch gekennzeichnet, dass** die von den Schenkelleisten (42) es u-förmigen Mittelteils (41) nach aussen abstehenden Leisten (43) entlang ihrer Aussenkante (44) entsprechend der Breite der Führungsrillen (12) verbreitert ist.

9. Befestigungsvorrichtung nach einem der Ansprüche 7 - 8, **dadurch gekennzeichnet, dass** die Gleitschiene (11) der genannten Schlitzöffnung (13) für den Durchgriff von Befestigungsschrauben (30) gegenüberliegend eine weitere Schlitzöffnung (14) zwischen den Führungsrillen (12) aufweist, welche weitere Schlitzöffnung (14) das Einschubprofil (40) mit seinem u-förmigen Mittelteil (41) durchgreift.

10. Einschubprofil (40) für eine Befestigungsvorrichtung nach einem der Ansprüche 1-9, **dadurch gekennzeichnet,**
dass es mit einem Gewindekanal (45) für das Eindrehen von Befestigungsschrauben (30) an einer beliebigen Position in Profil-Längsrichtung versehen ist,

**dass** der Gewindekanal (45) an seinen sich gegenüberliegenden Seitenwänden (42) jeweils mit einer in Profil-Längsrichtung verlaufenden Riffelung (46) aus einer gleichmässigen Abfolge von Vorsprüngen und Vertiefungen versehen ist,

**dass** die Vorsprünge an einer Seitenwand (42) den Vertiefungen an der anderen Seitenwand (42) gegenüberliegen und umgekehrt,

**dass** die lichte Weite W zwischen den Riffelungen (46), der Höhenunterschied H zwischen den Vorsprüngen und den Vertiefungen der Riffelungen (46) sowie der gegenseitige Abstand A zwischen zwei benachbarten Vorsprüngen bzw. zwei benachbarten Vertiefungen der Riffelungen (46) wie folgt entsprechend dem Aussendurchmesser D (Gewindebolzen), dem Kernlochdurchmesser D1 (Innengewinde) und der Steigung P eines Normgewindes entsprechend bemessen sind:

$$W = D1$$

$$H = (D - D1)/2$$

$$A = P$$

**dass** Befestigungsschrauben (30) mit einem Normgewinde zerstörungfrei und mehrfach an derselben Position in den Gewindekanal (45) ein- und aus diesem wieder ausgedreht werden können,

**dass** das Einschubprofil (40) zur Ausbildung des Gewindekanals (45) ein u-förmiges Mittelteil (41) aufweist, an dessen Seitenwänden (42) nach aussen abstehende Leisten (43) angeformt sind, und

**dass** die von den Seitenwänden (42) des u-förmigen Mittelteils (41) nach aussen abstehenden Leisten (43) entlang ihrer Aussenkante (44) verbreitert sind.

11. Einschubprofil (40) nach Anspruch 10, **dadurch gekennzeichnet, dass** die lichte Weite W zwischen den Riffelungen (46), der Höhenunterschied H zwischen den Vorsprüngen und den Vertiefungen der Riffelungen (46) sowie der gegenseitige Abstand A zwischen zwei benachbarten Vorsprüngen bzw. zwei benachbarten Vertiefungen der Riffelungen (46) wie angegeben entsprechend dem Aussendurchmesser D (Gewindebolzen), dem Kernlochdurchmesser D1 (Innengewinde) und der Steigung P eines metrischen Normgewindes, vorzugsweise eines M6-Normgewindes, bemessen sind.

12. Einschubprofil (40) nach einem der Ansprüche 10 oder 11, **dadurch gekennzeichnet, dass** sich die lichte Weite W zwischen den Riffelungen(46) an den Seitenwänden (42) des Gewindekanals in Eindrehrichtung der Befestigungsschrauben (30) verjüngt.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20200800124 U1